# EUROPEAN PATENT SPECIFICATION

(11) **EP 4 118 054 B1**
(45) Date of publication and mention of the grant of the patent: **06.05.2026**
(21) Application number: 21712257.1
(22) Date of filing: 15.03.2021
(51) Int. Cl.: C04B 28/00

(54) **MINERAL BINDER**
MINERALISCHES BINDEMITTEL
LIANT MINÉRAL

(30) Priority: 13.03.2020 EP 20162896
(43) Date of publication of application: 18.01.2023
(73) Proprietor: Nederlandse Organisatie voor toegepast- natuurwetenschappelijk onderzoek TNO, 2595 DA 's-Gravenhage (NL)
(72) Inventor: VALCKE, Siska Lisa Albertine, 2595 DA 's-Gravenhage (NL); VISSER, Johanna, Hendrica, Maria, 2595 DA 's-Gravenhage (NL); GARZÓN AMÓRTEGUI, Juan Felipe, 2595 DA 's-Gravenhage (NL)
(74) Representative: V.O.
(86) International application number: PCT/NL2021/050171
(87) International publication number: WO 2021/182961

(56) References cited:
- WO-A1-2013/176545
- CN-A- 108 101 577
- US-A1- 2020 031 717

## Description

The invention relates to a mineral binder, a mineral mortar precursor mixture, a mineral mortar or concrete mixture, and and a method for the preparation of a cured mineral mortar or concrete mixture.

Mineral binders are inorganic substances that are capable of binding aggregate to form a strong mineral mortar or concrete that is suitably used for construction purposes. Ordinary Portland cement is the most commonly used mineral binder and consists of calcium silicates (clinker) which are prepared by sintering limestone and aluminum-silicates. The process of preparing Ordinary Portland cement (OPC) is energy-consuming as high temperatures typically in the range of 1500 °C are required to prepare the clinker material. Next to the energy consumption and related CO₂ emissions, the calcination of limestone (CaCO₃⁾ during the process releases high amounts of CO₂. Mineral binders without Ordinary Portland cement, such as for example geopolymers, form a more environmentally friendly alternative to Ordinary Portland cement. They constitute a class of inorganic materials containing reactive minerals such as aluminosilicates which can undergo dissolution and polycondensation reactions. Under alkaline conditions, the reactive minerals dissolve into Si-O and Al-O phases which engage into a polycondensation reaction to form a network of linked Al-silicate phases. Such mineral binders can be employed to bind various components such as aggregates and are therefore advantageously used in mineral mortar and concrete mixtures.

Such mineral mortar mixtures, when cured, advantageously exhibit excellent mechanical properties, high durability and thermal stability. Furthermore, the mineral mortar or concrete mixture can be prepared at ambient or slightly higher temperature and can further advantageously be prepared from waste materials. This combination of properties makes such mineral mortar and concrete mixtures a sustainable alternative to common construction materials such as Ordinary Portland Cement based mortars and concrete.

Typical reactive minerals which can be used as base materials for such mineral mortar mixtures or concrete mixtures include fly ash, calcined clays, silica fume or ground granulated slag. Thus, by selecting a suitable combination of precursor reactive minerals, the properties of the obtained mineral mortar mixture or concrete mixture can be modulated.

In CN106495585, a geopolymer composition is disclosed that is prepared from metakaolin, fly ash and slag as reactive minerals and further comprises fine and coarse aggregate to form a geopolymer-based concrete suitable for use as pavement material. The disadvantage of CN106495585, however, is that the formed geopolymer exhibits an invariable greyish color, which is not suitable for applications wherein the color grey is not desired, *e.g.* for aesthetic reasons. CN 108 101 577 A discloses a mineral binder in an inorganic foam insulation material.

To acquire the desired color, a pigment can be added, but this requires the presence of an additional component in the geopolymer mixture, which adds costs and complexity to the preparation method. Furthermore, it is typically cumbersome to mimic the colors of natural rocks or stones with pigments, and thus often an artificial look is obtained. Also, the pigment is expensive and typically does not contribute to the strength of the product that can be obtained by the mixture, which makes it an expensive component compared to the overall cheap mineral components of the strength inducing binder components.

It is an object of the invention to provide a mineral binder suitable for use in a mineral mortar or concrete mixture, which mineral mortar mixture or concrete mixture has desired and/or selectable (*i*.*e*. good) aesthetic features, provides high strength and shows good water and acid resistance when cured. Such mineral mortar and concrete mixtures are suitable for applications wherein both good performance, *i*.*e*. high strength and/or good durability, as well as good aesthetics are required.

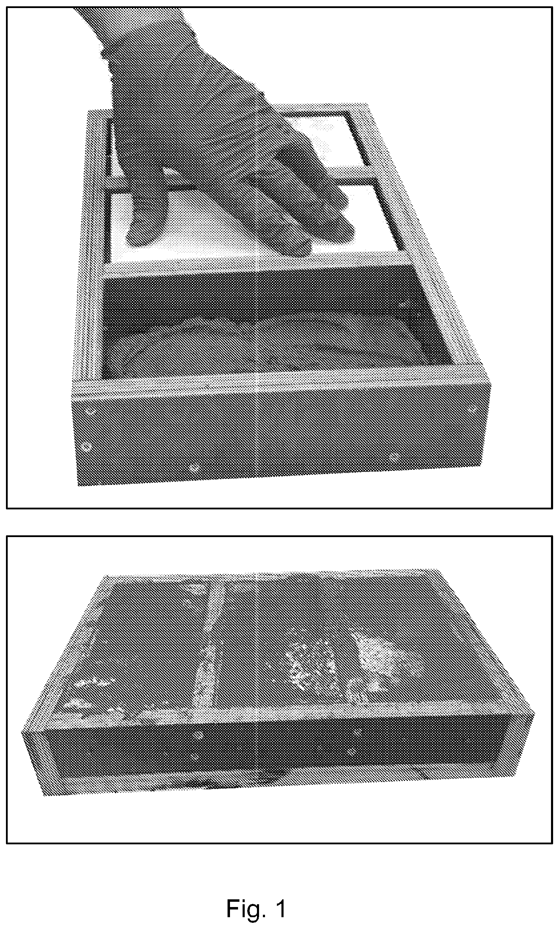

Figure 1 shows the preparation of a particular building unit as described in the invention. Top: a mold is filled with a layer of mineral mortar mixture and an insulating rigid core is placed on top of the mineral mortar mixture. Bottom: the rigid core is covered with mineral mortar mixture and the mineral mortar mixture can be allowed to cure.

The inventors found that a mineral binder can be obtained which is suitable for use in binding aggregate in a mineral mortar or concrete mixture, and provides the mineral mortar mixture and concrete mixture with advantageous properties, such as high strength, good durability (including freeze-thaw), good aesthetics and strong adherence to a rigid substrate. Typically, binding fine aggregate results in the mineral mortar, while binding fine and coarse aggregate results in the concrete mixture.

Accordingly, the invention relates to a mineral binder as defined in claim 1.

The calcined kaolinitic clay, the ultrafine crushed CDW and the chemical activator are present in a combined amount of at least 90 wt.%, preferably at least 95 wt.%, more preferably at least 99 wt.%, based on the total weight of the mineral binder.

In a preferred embodiment, the mineral binder according to the invention, suitable for use in the mineral mortar mixture, comprises at least 40 wt.%, such as 40-100 wt.%, preferably 45-95 wt.%, more preferably 50-90 wt.%, most preferably about 60-80 wt.%, of the calcined clay and the ultrafine crushed CDW based on the total weight of the mineral binder. These amounts gave particularly good performance results.

The mineral binder according to the invention, comprises calcined kaolinitic clay and ultrafine crushed CDW. These components comprise the reactive minerals that undergo a dissolution and polycondensation reaction upon chemical activation which together with aggregate bind, form a mineral mortar or concrete mixture with high strength, durability and good aesthetics upon curing. Without wishing to be bound by theory, it is believed that the obtained mechanical as well as aesthetic properties of the mineral mortar or concrete mixture are in large part due to the mineral composition of the calcined clay and ultrafine crushed CDW. Typically, the most abundant elements present in the mineral binder are oxygen (O), silicon (Si), aluminum (Al), iron (Fe) and/or Ca. The amount of these elements may differ for different types of calcined clay and metakaolin and ultrafine crushed CDW. For good acid resistance, it is preferred to use calcium-poor combinations of calcined clay and ultrafine crushed brick, which is as specified herein-below a type of ultrafine crushed CDW, that result in total Ca amounts that are typically lower than within regular OPC clinker (typically 60% Ca) or blast furnace slag based cements (typically 50% Ca).

Therefore, a particular embodiment of the invention further relates to a mineral binder, wherein the calcined clay and ultrafine crushed CDW comprise silicon expressed as wt.% SiO₂ between 70 and 80 wt.%, preferably between 73 and 76 wt.%, based on the total weight of metakaolin and ultrafine crushed CDW. Furthermore, the calcined clay and ultrafine crushed CDW preferably comprise Al expressed as wt% Al₂O₃ between 10 and 20 wt.%, preferably between 13 and 16 wt.%, based on the total weight of calcined clay and ultrafine crushed CDW. Preferably, the calcined clay and ultrafine crushed CDW comprise Fe expressed as Fe₂O₃ wt% between 2 and 6 wt.%, preferably between 3 and 5 wt.% of_{,} based on the total weight of calcined clay and ultrafine crushed CDW. Further present may be small amounts of between 1.0 wt.% and 2 wt.% of CaO, preferably between 1.4 wt.% and 1.7 wt.% of CaO, between 0.3 wt.% and 1 wt.%, preferably between 0.5 wt.% and 0.8 wt.% of MgO, between 0.5 wt.% and 1 wt.%, preferably between 0.6 wt.% and 0.8 wt.% of TiO₂ and between 1 and 2 wt.%, preferably between 1.2 and 1.5 wt.% of K₂O, based on the total weight of calcined clay and ultrafine crushed CDW. Other mineral components, if present, are preferably present in an amount of below 1 wt.%, preferably below 0.5 wt.%, more preferably below 0.1 wt.%, based on the total weight of calcined clay and ultrafine crushed CDW.

In particular embodiments, the mineral binder preferably contains a low amount of CaO, preferably between 0.5 and 2 wt.%, preferably 1 to 1.5 wt.% of CaO, based on the total weight of calcined clay and ultrafine crushed CDW. This is of a particular advantage for the acid resistance of products based on such a binder, as is detailed herein-below.

The mineral binder can further be defined in terms of amorphous phase. Preferably the mineral binder has an amorphous phase of between 30 and 60 wt.%, preferably between 35 wt.% and 55 wt.%, more preferably between 40 and 50 wt.%, based on the total weight of calcined clay and ultrafine crushed CDW. This is of particular advantage for the reactivity hence performance of the mineral binder.

Preferably, for good performance and favorable aesthetics, the weight ratio between calcined clay and ultrafine crushed CDW is 1:1 to 1:9, more preferably between 1:1 and 2:8, most preferably between 1:1 and 3:7.

In general, construction and demolition waste (CDW) contains a wide variety of materials such as concrete, bricks, wood, glass, metals and plastic. It includes waste produced by the construction and demolition of buildings and infrastructure, as well as road planning and maintenance. The major part of CDW consists of inorganic, mineral-based materials such as concrete, bricks and glass. This part is crushable and can suitably be used as the ultrafine crushed CDW for the present invention. The ultrafine crushed CDW in accordance with the present invention thus typically comprises ultrafine crushed ceramics, ultrafine crushed concrete or combinations thereof.

Preferably, the ultrafine crushed CDW is ultrafine crushed ceramics. Examples of preferred ultrafine crushed ceramics include ultrafine crushed brick and ultrafine crushed masonry. Ultrafine crushed brick made from baked red clay or a red, porcelain roof tile is particularly preferred. Other colors such as yellow may also be obtainable, at the desire of the user or architect. In this respect, yellow-colored or white metakaolin (which generally contain less iron) may also be used. Ceramic materials are typically obtained by baking mineral-rich materials such as clay to form a hard, brittle material that has the ability to withstand high temperatures. Preferably the ultrafine crushed ceramics are prepared by crushing ceramics of the type selected from the group consisting of bricks, porcelain such as porcelain roof tiles, terracotta. Moreover, the ultrafine crushed ceramic is preferably red, yellow, orange or another desirable color.

Herein, ultrafine crushed CDW is defined as small particles of material containing inorganic minerals. Ultrafine crushed ceramics is defined as small particles of ceramic material containing inorganic minerals. Due to this limited particle size, the ultrafine crushed CDW is reactive. The ultrafine crushed CDW have a maximum diameter of 250 µm, preferably 200 µm, more preferably 150 µm. Thus, the particle diameter is in the range of 1 to 150 µm, preferably 5 to 125 µm, more preferably 10 to 100 µm.

Advantageously, waste materials such as ceramic and masonry waste can be used in the mineral mortar mixture. Examples of suitable masonry waste streams include ultrafine crushed brick walls including ultrafine crushed brick and ultrafine crushed mortar. Using recycled materials has the advantage that a mineral mortar mixture can be prepared that is sustainable and cost-efficient.

Metakaolin (also referred to a calcined kaolinitic clay) is the preferred calcined clay as used in the present invention and refers to the anhydrous calcined form of kaolin and is generally present as small particles with a maximum diameter of 250 µm, preferably 200 µm, more preferably 150 µm. In particular the diameter is in the range of 1 to 150 µm, preferably 5 to 125 µm, more preferably 10 to 100 µm.

In contrast to certain known mineral binders, the mineral binder according to the invention advantageously does not require the presence of substantial amounts of clinker, fly ash or slag. Clinker is the dominant substance of Ordinary Portland cement, the most commonly used mineral binder for concrete. Fly ash and slag, in particular virgin or unreacted fly ash and slag, are the most frequently used materials to reduce the amount of primary clinker in mineral binders, particularly in those binders not containing any clinker at all. Fly ash is a combustion product that is composed of the fine mineral particles left of burned fuel that are driven out of the reactor together with flue gasses. Depending on the source used, fly ash typically contains large amounts of SiO₂, Al₂O₃ and in some cases CaO. Slag is a by-product that is obtained when metals such as iron, copper, lead or nickel are isolated from their raw source (ore), by melting. For example, ground granulated blast-furnace slag (GGBS) is obtained by quenching molten iron slag from a blast furnace in water of steam. A glassy, granular product containing CaO, SiO₂, Al₂O₃ and MgO is obtained, which can be dried and ground into a powder.

Conventionally, (virgin or unreacted) fly ash and GGBS slag are typically added as reactive non-clinker mineral to the mineral binder to provide sufficient strength to the cured mineral mortar mixture. However, the use of (grey) Portland clinker, fly ash or slag in a mineral binder is not desired for aesthetic purposes. The inventors now surprisingly found that a mineral binder comprising calcined clay and ultrafine crushed CDW, can be prepared that does not require substantial amounts of fly ash or slag, whilst still providing sufficient strength to the cured mineral mortar or concrete mixture.

Accordingly, the combined amount of the ultrafine crushed CDW and calcined kaolinitic clay, and the chemical activator is at least 90 wt.%, preferably at least 95 wt.%, more preferably at least 99 wt.% based on the total weight of the mineral binder and the mineral binder does not comprise substantial amounts (*i*.*e*. more than 10, preferably 5, more preferably 1 wt.%) of fly ash, slag, metal tailings or silica fume. Preferably the mineral binder or mineral mortar precursor mixture as disclosed herein is essentially free of fly ash, slag, metal tailings, rice husk ash, volcanic ash , silica fume and the like. Essentially free herein means that is typically contains less than 1 wt.%, preferably less than 0.5 wt.%, most preferably less than 0.1 wt.% of said component.

Furthermore, the mineral binder according to the present invention has advantageously good aesthetics without the need to add pigments. These aesthetics are due to the use of the ultrafine crushed CDW and calcined clay as reactive minerals, which provide good aesthetics and further make the use of other, strength-providing reactive minerals redundant. This is particularly the case of ultrafine crushed ceramics. This combination of characteristics makes the mineral binder particularly suitable for a wide range of applications.

The mineral binder, suitable for use in the mineral mortar mixture, comprises about 2-50 wt.%, more preferably 5-40 wt.%, even more preferably about 10-30 wt.% of the chemical activator, based on the total weight of the mineral binder.

The chemical activator reacts with the calcined clay and the ultrafine crushed CDW and may be any alkaline component suitable to increase the pH of the mineral mortar mixture to at least 11, preferably at least 12. Examples of suitable chemical activators include hydroxide and/or silicate ions having cations of alkali metals or alkaline earth metals, such as calcium, potassium or sodium as counter ion. Preferably, the chemical activator comprises sodium hydroxide, calcium hydroxide, potassium hydroxide, cesium hydroxide, sodium-silicate waterglass, potassium-silicate waterglass, or a mixture thereof.

The mineral binder may also be pre-mixed with fine aggregate to form a mineral mortar precursor mixture or with coarse and optionally additional fine aggregate to form a concrete precursor mixture.

Accordingly, the invention further relates to a mineral mortar precursor mixture, suitable for use in a mineral mortar mixture, based on the mineral binder according to the invention in an amount of 15-50 wt.%, preferably 20-40 wt.%, more preferably 25-30 wt.% of said mineral mortar precursor mixture further comprising 50-85 wt.% of a fine aggregate comprising particles having a diameter of up to 4 mm, preferably at least comprising particles having a diameter of between 1 µm and 4 mm, more preferably at least comprising particles having a diameter of between 155 µm and 3 mm. For optimal performance of the mineral mortar, the particle size distribution of the particles present in the fine aggregate is continuous. The combined amount of the mineral binder and the fine aggregate in the mineral mortar precursor mixture is at least 90 wt.%, preferably at least 95 wt.%, more preferably at least 99 wt.%, based on the total weight of the mineral mortar precursor mixture.

The mineral mortar precursor mixture, suitable for use in the mineral mortar mixture, comprises about 50-85 wt.%, more preferably 60-85 wt.%, even more preferably about 70-80 wt.% of fine aggregate based on the total weight of the mineral mortar precursor mixture. The fine aggregate is a substantially inert material, meaning that it does not substantially react with the chemical activator, the calcined clay and/or the ultrafine crushed CDW. In terms of reactive mineral components, the fine aggregate preferably comprises at most 5 wt.%, more preferably at most 3 wt.%, even more preferably at most 2 wt.%, in particular at most 1 wt.% of reactive mineral components. Without wishing to be bound by theory, it is believed that the use of substantially inert, fine aggregate contributes to the stability of the cured mineral mortar mixture over time. It is envisaged that when reactive aggregate is present, the mineral mortar mixture continues to react, even after curing. This process may lead to cracking and loss of strength of the cured mineral mortar mixture over time.

Preferably the fine aggregate comprises a material that is derived from nature, such as river sand. Also, the fine aggregate may comprise fine crushed CDW. It comprises small particles with a minimum diameter of at least 150 µm, preferably at least 175 µm, more preferably at least 200 µm. Thus, the fine aggregate at least comprises particles having a diameter in the range of 150 µm to 4 mm, preferably at least comprising particles having a diameter in the range of 175 µm to 3 mm, more preferably at least comprising particles having a diameter in the range of 200 µm and 2 mm. Fine aggregate can be distinguished from ultrafine crushed CDW and calcined clay in terms of particle size and typically also in mineralogical content. Moreover, in contrast to ultrafine crushed CDW, the fine aggregate according to the present invention is a substantially inert material which does not substantially engage in the polycondensation reaction as described above. Instead, the fine aggregate mainly contributes to the texture and strength of the cured mineral mortar mixture.

Preferably, the mineral binder and mineral mortar precursor mixture of the present invention are substantially dry solids, i.e. comprising at most 10 wt.%, preferably at most 5 wt.% of moisture. This is in particular beneficial to limit early, undesired activation of the reactive minerals when the chemical activator is present in the mineral binder. The low moisture content may thus advantageously provide the mineral binder and mineral mortar precursor mixture a long shelf life. It is further an advantage that in absence of substantial amounts of moisture, the volume of the mineral binder or mineral mortar precursor mixture is reduced, which allows packaging and shipping of the mineral binder or mineral mortar precursor mixture in an economical manner.

The mineral binder and mineral mortar precursor mixture can advantageously be used to prepare a mineral mortar mixture by the addition of water and/or fine aggregate to induce the activation of the reactive minerals. Accordingly, the invention further relates to a mineral mortar mixture based on the mineral mortar precursor mixture of the invention in an amount of 65 wt.% or more, preferably 65-96 wt.%, more preferably 80-90 wt.%, most preferably 85-88 wt.%, wherein said mineral mortar mixture comprises said chemical activator and wherein said mineral mortar mixture further comprises water in an amount of less than 25 wt.%, preferably 4-25 wt.%, more preferably 10-20 wt.%, most preferably 15-18 wt.% of water. In the mineral mortar mixture, the combined amount of water and the mineral mortar precursor mixture including the chemical activator is at least 90 wt.%, preferably at least 95 wt.%, more preferably at least 99 wt.%, based on the total weight of the mineral mortar mixture.

The mineral binder according to the present invention is particularly suitable for the preparation of dry earth mineral mortar mixture. Dry earth mineral mortar mixtures are capable of retaining their shape without curing the mixture at elevated temperatures. The present inventors found that by using ultrafine crushed CDW and a relatively low amount of water (e.g. less than 10 wt.%) a good dry earth mineral mortar mixture can be obtained which is suitable for the production of pavement tiles and the like. The inventors found that, advantageously, the mineral mortar mixture according to the present invention does not require high amounts of calcium for strength development (as is the case for conventional mortar mixtures, for which reason ground granulated blast furnace slag or OPC cement is added to geopolymer mixes). Therefore, ultrafine crushed CDW having a soluble calcium content of less than 30 wt.% can suitably be used. This can lead to a building unit such as a pavement tile having a soluble calcium content of less than 12.5 wt.% or even lower such as less than 7.5 wt.%. Herein the soluble calcium content is defined as calcium that can be solubilized from the ultrafine crushed CDW at a pH of 12 or higher (*i*.*e*. an alkaline environment) at 20 °C. In contrast, cement systems based on ground granulated blast furnace slag or OPC comprise amount 50 and 60 wt.% soluble calcium respectively. The mineral mortar mixture based on ultrafine crushed CDW is accordingly environmentally more friendly than conventional mixtures based on OPC.

In further embodiments, the mineral binder can also advantageously be used to bind coarse aggregate, to form a concrete-like material. Coarse aggregate is distinguished from fine aggregate and ultrafine crushed CDW in terms of particle diameter. Preferably coarse aggregates comprise particles having a diameter in the range of 4 mm to 50 mm, preferably the coarse aggregate at least comprises particles in the range of 10 mm to 40 mm, more preferably at least in the range of 15 and 30 mm. For optimal performance, the concrete mixture or precursor concrete mixture comprises both fine and coarse aggregate, wherein the particle size distribution of the particles is continuous. Further, the coarse aggregate is a substantially inert material, meaning that it does not substantially react with the optionally present fine aggregate, the chemical activator, the calcined clay and/or the ultrafine crushed CDW. In terms of reactive mineral components, the coarse aggregate preferably comprises at most 5 wt.%, more preferably at most 3 wt.%, even more preferably at most 2 wt.%, in particular at most 1 wt.% of reactive mineral components. Examples of suitable coarse aggregates are gravel, stones, rocks, recycled concrete and coarse crushed CDW.

Thus, the invention further relates to a concrete precursor mixture, suitable for use in a concrete mixture, based on the mineral binder according to the invention in an amount of 15-45 wt.%, said precursor concrete mixture further comprising:
c) 50-85 wt.% of a coarse and optionally fine aggregate, wherein the coarse aggregate has a diameter of between 4 mm and 50 mm; and
wherein the combined amount of components a)-c) is at least 90 wt.%, preferably at least 95 wt.%, more preferably at least 99 wt.% based on the total weight of the concrete precursor mixture.

The concrete mixture can be prepared by the addition of water to the concrete precursor mixture, or by addition of the coarse and optionally fine aggregate and water to the mineral binder. Addition of all the above components activates the reactive mineral components to form the concrete mixture. Accordingly, the invention further relates to a concrete mixture based on the concrete precursor mixture of the invention in an amount of 65-96 wt.%, preferably 80-90 wt.%, more preferably 85-88 wt.%, wherein said mineral concrete mixture comprises said chemical activator and wherein said mineral concrete mixture further comprises 25 wt.% or less preferably 4-25 wt.%, more preferably 10-20 wt.%, most preferably 15-18 wt.% of water. In the mineral concrete mixture, the combined amount of water and the concrete precursor mixture including the chemical activator is at least 90 wt.%, preferably at least 95 wt.%, more preferably at least 99 wt.%, based on the total weight of the concrete mixture.

Generally, upon preparing the mineral mortar mixture or concrete mixture, hardening and curing may immediately occur due to the reactivity of the components. As such, the amounts of the components referred to herein, relate to the amounts as combined, before curing initiates. It may be appreciated that due to the curing process, the amounts may reduce, for instance due to evaporation or conversion of the water. Moreover, the mineral mortar mixture according to the present invention is described as being 'based on' the components, meaning that the mineral mortar mixture may be in any curing state, *e*.*g*. before curing or partially cured.

In particular embodiments, the mineral mortar mixture and concrete mixture as described herein, is preferably free-flowing at the temperature at which it is applied, meaning that the mineral mortar mixture upon leaving the container does not retain its shape. The mineral mortal mixture or concrete mixture may thus be a fluid suspension, a viscous suspension or a viscous paste. This allows easy application of the mineral mortar mixture or concrete mixture to any substrate or in any mold which is suitable therefor.

After curing or hardening the mineral mortar mixture or concrete mixture, a cured mineral mortar mixture is obtained that comprises aggregate particles embedded in the cured mineral binder formed by activating the calcined clay and ultrafine crushed CDW with the chemical activator. This cured mineral mortar or concrete exhibits the advantageous properties such as high strength, good aesthetics and high durability, as described elsewhere herein.

Preferably, the cured mineral mortar has a compressive strength of at least 20 MPa, more preferably at least 30 MPa, even more preferably at least 40 MPa, even more preferably at least 50 MPa, most preferably at least 70 MPa. Compressive strength can be determined using any suitable method therefore known to the skilled person, such as described in EN 196-1.

Curing or hardening is typically achieved by allowing the mineral mortar mixture to stand for a certain amount of time, preferably at least 12 h, more preferably at least 18 h., even more preferably at least 24 h. Curing or hardening is preferably achieved at ambient temperature, such as between 20 °C and 60 °C, more preferably 25 °C to 50 °C, most preferably between 30 °C to 40 °C. Preferably, the mineral mortar or concrete mixture is covered during the curing or hardening process.

Thus, the cured mineral mortar mixture or cured concrete can advantageously be prepared in an environmentally friendly manner, because the mixture does not require heating to high temperatures of at least 50 °C or more, whereas still sufficient strength is obtained. Furthermore, the mineral mortar mixture and concrete mixture can be prepared from recycled material such as used bricks and/or types of CDW, which further reduces the impact on the environment. Accordingly, the mineral mortar and concrete constitute a good alternative to regular building materials such as cement based mortar and concrete or ceramic bricks and tiles.

The mineral mortar mixture according to a particular embodiment of the invention can also be described as being based on about 15-30 wt.%, preferably 18-25 wt.%, more preferably 19-23 wt.% of calcined clay and ultrafine crushed CDW, about 1-10 wt.%, preferably 3-9 wt.%, more preferably 5-8 wt.% of chemical activator, 50-70 wt.%, preferably 55-65 wt.%, more preferably 60-65 wt.% of fine aggregate and about 4-25 wt.%, preferably 10-25 wt.%, more preferably 15-20 wt.% of water based on the total weight of the mineral mortar mixture, wherein the combined amounts of the calcined kaolinitic clay, ultrafine crushed CDW, chemical activator, fine aggregate and water is at least 90 wt.%, preferably at least 95 wt.%, more preferably at least 99 wt.% based on the mineral mortar mixture. Also, as described above, the weight ratio between calcined kaolinitic clay and ultrafine crushed ceramic is preferably 1:1 to 1:9, more preferably between 1:1 and 2:8, most preferably between 1:1 and 3:7.

Due the high strength and good aesthetics of the cured mineral mortar mixture, the mineral mortar mixture is particularly suitable for use in building units suitable in construction.

A building unit, which is not claimed, in the context of the present disclosure refers to any unit which can be used for building, wherein a high strength, good aesthetics and/or good durability is required, for example bricks, pipes, tiles such as pavement tiles, rods, pillars, plates, exposed concrete and mortar etc.

It was further found that the mineral mortar mixture can advantageously be applied in a thin layer, whilst still providing sufficient load-bearing strength. As such, the present disclosure further relates to a preferred building unit which comprises a rigid layer, preferably a rigid insulating layer with insulating properties, which rigid layer is at least partly covered with an outer layer of a cured mineral mortar mixture as defined herein, wherein the outer layer has a layer thickness in the range of 0.5 to 30 mm, such as maximally 25 mm, preferably maximally 10 mm, more preferably maximally 5 mm. In terms of percentage of the total thickness of the building unit, the thickness of the outer layer is maximally 25%, preferably maximally 20%, more preferably maximally 15%, most preferably 10%. Herein, the thickness of both the outer layer and building unit are determined by measuring in the same direction, as the skilled person would understand. Advantageously, it is generally not required to mechanically fix the mineral mortar to the rigid layer, as it is adhesive by itself, which further adds to the strength of the building unit.

Preferred are building units of the present disclosure, wherein at least 10%, preferably at least 25%, more preferably at least 50%, more preferably at least 75%, most preferably 100% of the surface of the rigid layer is covered by the outer layer.

By using a thin outer layer, the amount of resource materials necessary for the manufacturing of the building unit is drastically reduced compared to current combinations of brick/stone and insulation material. As a consequence, the weight of the building unit is significantly lower, which decreases the load for the construction workers.

Preferably, a building unit of the present disclosure has a weight of only 70%, more preferably only 40%, most preferably only 30% of a classical building unit, such as a solid brick, of the same size.

Additionally, the building units of the present disclosure can be prepared in a more environmentally friendly and thus sustainable manner.

First of all, contrary to traditional bricks, the building units of the present disclosure do not need to be fired in an oven or kiln, which allows for a large reduction in CO₂ emission in the manufacturing of the building units. Moreover, the building units of the present disclosure can be prepared from recycled materials, which further reduces the impact on the environment.

There are different ways to apply such a thin layer of mineral mortar mixture onto the rigid layer. For example, the mineral mortar mixture in liquid form can be poured, smeared or sprayed over the rigid layer, or the rigid layer can be dipped into a container of mineral mortar mixture. The mineral mortar mixture is then allowed to cure and, if necessary, excess mineral mortar mixture can then be removed, for example by scraping, cutting or carving of the building unit. The skilled person will know how to do this.

In a preferred embodiment, the building units of the present disclosure comprise a rigid insulating layer which is at least partly covered with an outer layer of a cured mineral mortar mixture, which cured mineral mortar mixture has a brick-like appearance.

This aesthetic feature makes the building unit particularly suitable to be used in the construction of an outer leaf wall. Such building units have as major advantage that they combine the insulating properties of insulating material, with the appearance of traditional bricks frequently used for the building of the outer leaf wall, while still maintaining sufficient strength and protection to be used for construction. Hence, the insulating layer and outer leaf wall from a cavity wall, can now be combined in one layer, which significantly reduces the costs of the building of a (cavity) wall. In addition, the absence of a separate insulating layer in a wall allows for a reduction in space in the construction of new buildings by approximately 10-40% of the total thickness of a wall. Likewise, the time needed for the construction of such a wall is markedly lower.

Furthermore, the renovation of existing buildings to improve the insulating properties of the building can be achieved without a need to adjust the foundations, casings and roof connections. In this process, the outer leaf wall is removed and replaced with a new outer leaf wall comprising the building blocks of the present disclosure.

The rigid, insulating layer of the building units preferably needs to fulfill the thermal insulation requirements of a building.

Regarding the thermal insulation of new buildings in the Netherlands, outer walls may be required to have a thermal resistance (R-value) of at least 4.5 m²K/W, whereas base floors may be required to have an R-value of at least 3.5 m²K/W and the roof may be required to have an R-value of at least 6 m²K/W. When renovating existing buildings, the R-values of outer walls, inner walls/floors and roofs may be required to be at least 1.3, 2.5 and 2.0 m²K/W respectively.

Therefore, typically insulating materials that display a maximal λ value of 0,065 W/mK are considered suitable for use in the building units of the present disclosure. Examples of insulating materials that are suitable for the current invention are expanded polystyrene (EPS), extruded polystyrene (XPS), polyisocyanurate (PIR), stonewool, glasswool, foamglass, hemp wool, aerogel, phenolic foam and polyurethane (PUR).

Building units such as the building units of the present disclosure further need to be in accordance with the local construction regulations. These regulations concern the safety, usability and durability of the building, as well as the impact of the building or construction on the environment and the health of the residents/users.

Further, the building units are preferably resistant to relevant environmental loads such as rain, freeze-thaw, thermal shock, salts, etc. With resistant is meant that they should not significantly alter mechanically, physically, or chemically in response to these conditions. Characteristics should allow for the use of the building units in different climates, e.g. continental or oceanic climates, hot or cold climates, humid or arid climates etc.

In another embodiment, the building units should be able to withstand different temperatures. The building units according to the present disclosure can be used at temperatures varying from -15 °C to 80 °C. Furthermore, the building units according to the present disclosure are resistant to temperature changes (thermal shock) and cycles of freeze-thawing.

The invention further comprises a method for the manufacturing of the building units of the present disclosure, which is not claimed, comprising the steps of providing rigid layer, preferably a rigid insulating layer with insulating properties in a suitable form;
covering said rigid layer for at least 10%, preferably at least 25%, more preferably at least 50%, more preferably at least 75%, most preferably 100% with a mineral mortar mixture;
allowing to cure said mineral mortar.

An advantage of this method is that the building units do not need to be heated to high temperatures, for example temperatures exceeding 50 °C or 60 °C or even higher such as 100 °C or 500 °C or 1000 °C. Curing of the building unit can advantageously take place at temperatures between 20 and 60 °C, preferably between 25 and 50 °C, in particular between 30 and 40 °C. Therefore, the manufacturing of the building units is environmentally friendly, because a significant reduction in the emission of greenhouse gasses, such as CO₂, takes place.

Further, the units of the present disclosure can be used in the construction of a wall. The skilled person will know how to build a wall and all methods known in the art to construct such a wall are useful for the present invention. Examples include but are not limited to laying bricks using mortar or glue. Accordingly, the present disclosure relates to a method for the construction of a wall, which is not claimed.

In a further embodiment, the building units can be used in a method for building a wall, comprising:
- providing the building units according to the present disclosure;
- introducing means for adhering the building units onto the building units;
- laying the building units together to form a wall.

Alternatively, the building units may not be individually covered with a layer of mineral mortar mixture, but the mineral mortar mixture may be applied after the building units are piled together under the formation of a wall, wherein the mineral mortar mixture is used to glue the building units together. The wall of insulating material is then covered with a layer of mineral mortar mixture and the mineral mortar mixture is allowed to cure.

Further, the present disclosure relates to the use of the building units for the construction of a building or wall, which is not claimed.

It was further found that the mineral mortar mixture is also particularly suitable for applications wherein acid and water resistance are of high importance. An example of such an application is as a repair coating, mortar or concrete for sewer pipes and inspection chambers which are building units for sewage systems. Sewer pipes or inspection chambers contain waste water that can have a low pH and therefore has the ability to corrode conventional sewer pipes. In order to prevent the pipe from leaking, or if there is already a leakage, to stop the leakage, the mineral mortar mixture according to the present invention can be used for renovation of the sewer system. Alternatively, the high strength of the mineral mortar as defined herein allows the application of the mineral mortar as main material for preparing sewer systems, i.e. as replacement for current materials that are used to build sewer systems.

Without wishing to be bound by theory, it is believed that the cured mineral mortar mixture is less susceptible to acidic degradation, because it generally comprises a low amount of calcium, for instance less than 5 wt.%, preferably less than 2 wt.%, based on the total weight of the cured mineral mortar mixture. Under acidic conditions, networks containing calcium are susceptible to acid-promoted hydrolysis of the mineral mortar. This leads to at least partial degradation of the polymer and thus lowering the strength and water resistance of the mineral mortar mixture.

However, the presence of calcium is also known to be highly contributing to fast setting and early strength of mineral mortars. Accordingly, it is often present in mineral mortar mixtures of which a high early as well as long-term strength (in non-acid environment) is required. Thus, the present finding that a mineral mortar mixture can be obtained which is both strong and has good endurance is highly surprising.

For the purpose of clarity and a concise description features are described herein as part of the same or separate embodiments, however, it will be appreciated that the scope of the invention may include embodiments having combinations of all or some of the features described.

The invention will now be illustration with the following nonlimiting examples.

### Example 1 Preparation of the building unit

A mineral mortar mixture was prepared by adding successively 60 g water, 340.6 g of soluble silicate (47-52 wt.% solid; molar ratio Na₂O or K₂O to SiO₂: 0.6-1.2), 1350 g sand, 213.9 g ultrafine crushed red brick (diameter <125 µm) and 213.9 g metakaolin powder to a Hobart mixer and mixing the mixture for five minutes. The mineral composition of the metakaolin and ultrafine crushed red brick is described in Table 1.

**Table 1; mineral composition of the ultrafine crushed brick and metakaolin**

| Mineral (wt.%) | Ultrafine crushed red brick | metakaolin |
|---|---|---|
| SiO₂ | 76.6 | 69.9 |
| Al₂O₃ | 10.4 | 22.3 |
| CaO | 2.14 | 0.75 |
| MgO | 1.01 | 0.17 |
| Fe₂O₃ | 4.51 | 3.14 |
| Na₂O | 0.88 | <0.10 |
| K₂O | 2.22 | 0.26 |
| Mn₃O₄ | 0.14 | <0.02 |
| TiO₂ | 0.67 | 1.10 |
| SnO₂ | <0.02 | <0.02 |
| MoO₃ | <0.01 | <0.01 |
| SrO | 0.01 | <0.01 |
| PbO | <0.01 | <0.01 |
| ZnO | 0.02 | <0.01 |
| CuO | <0.01 | <0.01 |
| NiO | <0.02 | <0.02 |
| CoO | <0.01 | <0.01 |
| Cr₂O₃ | 0.01 | <0.01 |
| V₂O₅ | <0.02 | <0.02 |
| BaO | 0.05 | <0.03 |
| ZrO₂ | 0.05 | 0.07 |
| P₂O₅ | 0.15 | <0.10 |
| LOI | - | - |
| Total | <98.96 | <98.07 |

A layer of about 4 mm or 8 mm of the mixture was poured into a mold with dimensions of 20x10x5 cm. A block of XPS (19.2x9.2x4.2 or 19.6x9.6x4.6 cm) was placed on top of the layer and fixed with pins to the mold to prevent floating (see Fig. 1 top view). More of the mixture was added until the XPS was completely covered with the mineral mortar mixture (Fig. 1 bottom view). Excess of the mixture was removed and the building unit was covered and left to cure for one day at 40 °C. The mold was removed and the building units were subjected to further testing.

### Example 2 Freeze-thaw resistance

The building units of Example 1 were subjected to an accelerated freeze thaw test according to the standard test method NEN EN 772-22. For this, two walls were built of 0.25 m² following the scheme of the standard and submerged in water for 7 days. Subsequently, the walls were subjected to 100 cycles of: (120 ± 5) min at (-15 ± 3) °C, then (20 ± 1) min at (20 ± 3) °C and (120 ± 10) seconds of splash water. After the 100 cycles, the walls were left at room temperature to thaw completely. After freeze-thaw testing according to NEN-EN 772-22:2019, the insulation bricks did not show any visual damage. The mortar does not have any influence on the performance of the insulation bricks in the freeze-thaw cycles.

### Example 3 - Pavement tiles

Three earth-dry mortar prisms ([1], [2] and [3]) were prepared in the lab for testing for the application of pavement tiles with a binder and a mineral mortar mixture thereof having compositions as provided in Table 2. The compressive strength and binding strength were also determined as described herein-above.

**Table 2; composition and strength of earth-dry mortar prisms**

| | **[1] w/w%** | **[2] w/w%** | **[3] w/w%** |
|---|---|---|---|
| Fine sand | 67 | 68 | 67 |
| Metakaolin powder | 19 | 20 | 19 |
| Activator (47-52 wt.% solid; molar ratio Na₂O or K₂O to SiO₂: 0.6-1.2) | 14 | 7 | 9 |
| Ca(OH)₂ activator | - | - | 0.6 |
| Water | 0 | 6 | 4 |
| Total mortar mixture | 100 | 100 | 100 |
| Total solid activator content | 7 | 3.5 | 5 |
| Total water content | 7 | 9.5 | 8 |
| Compressive strength (MPa) | 69 | 20 | 52 |
| Bending strength (Mpa) | 7 | 3 | 6 |

## Claims

1. A mineral binder suitable for use in binding aggregate in a mineral mortar or concrete mixture, said binder comprising the following components:
a) at least 40 wt.% of a calcined kaolinitic clay and ultrafine crushed construction and demolition waste (CDW), wherein the ultrafine CDW has a maximum diameter of 250 µm,
b) 2-50 wt.% of a chemical activator; and
wherein the calcined kaolinitic clay, the ultrafine crushed CDW and the chemical activator are present in a combined amount of at least 90 wt.%, based on the total weight of the mineral binder.

2. The mineral binder according to the previous claim, wherein the calcined kaolinitic clay, the ultrafine crushed CDW and the chemical activator are present in a combined amount of at least 95 wt.%, preferably at least 99 wt%. based on the total weight of the mineral binder.

3. The mineral binder according to any of the preceding claims, wherein the ultrafine crushed CDW is selected from the group consisting of ultrafine crushed ceramics, ultrafine crushed concrete and combinations thereof, preferably selected from the group consisting of ultrafine crushed brick, ultrafine crushed masonry and combinations thereof, most preferably wherein the ultrafine crushed CDW is ultrafine crushed brick.

4. The mineral binder according to any of the preceding claims, wherein the ultrafine crushed CDW is ultrafine crushed brick and wherein the calcined kaolinitic clay and ultrafine crushed brick contains between 70-80 wt.% of SiO₂, between 10 and 20 wt.% of Al₂O₃ and between 2 and 6 wt.% of Fe₂O₃, based on the total weight of the ultrafine crushed CDW and the calcined kaolinitic clay.

5. The mineral binder according to any of the preceding claims, wherein the calcined kaolinitic clay is metakaolin.

6. The mineral binder according to any of the previous claims, wherein the weight ratio between calcined kaolinitic clay and ultrafine CDW is 1:1 to 1:9, preferably between 1:1 and 2:8, more preferably between 1:1 and 3:7.

7. The mineral binder according to any of the preceding claims, wherein the CDW has a maximum diameter of 200 µm, preferably 150 µm.

8. The mineral binder according to any of the previous claims containing less than 1 wt.%, preferably less than 0.5 wt.%, more preferably less than 0.1 wt.% of fly ash, slag, metal tailings, rice husk ash, volcanic ash and silica fume.

9. A mineral mortar precursor mixture, suitable for use in a mineral mortar mixture, based on the mineral binder according to any of the previous claims in an amount of 15-50 wt.%, said mineral mortar precursor mixture further comprising:
c) 50-85 wt.% of a fine aggregate comprising particles having a diameter of up to 4 mm, preferably between 155 µm and 4 mm; and
wherein the combined amount of components a)-c) is at least 90 wt.%, preferably at least 95 wt.%, more preferably at least 99 wt.% based on the total weight of the mineral mortar precursor mixture.

10. A mineral mortar mixture based on the mineral mortar precursor mixture of claim 9 in an amount of 65-96 wt.%, wherein said mineral mortar mixture comprises said chemical activator and wherein said mineral mortar mixture further comprises:
d) water in an amount of 25 wt.% or less, preferably 4-25 wt.% of water;
wherein the combined amount of components a)-d) is at least 90 wt.%,
preferably at least 95 wt.%, more preferably at least 99 wt.% based on the total weight of the mineral mortar mixture.

11. A concrete precursor mixture, suitable for use in a concrete mixture, based on the mineral binder according to any of claims 1-8 in an amount of 15-45 wt.%, said precursor concrete mixture further comprising:
c) 50-85 wt.% of a coarse and optionally fine aggregate, wherein the coarse aggregate comprises particles having a diameter of between 4 mm and 50 mm; and
wherein the combined amount of components a)-c) is at least 90 wt.%, preferably at least 95 wt.%, more preferably at least 99 wt.% based on the total weight of the concrete precursor mixture.

12. A concrete mixture based on the concrete precursor mixture of claim 11 in an amount of 65-96 wt.%, wherein said concrete mixture comprises said chemical activator and wherein said concrete mixture further comprises:
d) 4-25 wt.% of water; wherein the combined amount of components a)-d) is at least 90 wt.%, preferably at least 95 wt.%, more preferably at least 99 wt.% based on the total weight of the concrete mixture.

13. A method for the preparation of a cured mineral mortar mixture or cured concrete, said method comprising providing the mortar mixture according to claim 10 or the concrete mixture according to claim 12, and allowing said mixture to cure.

14. The method according to claim 13, wherein curing is achieved by allowing the mineral mortar mixture to stand for at least 12 h, preferably at least 18 h, more preferably at least 24 h, and preferably wherein curing is achieved at a temperature between 20 °C and 60 °C, more preferably 25 °C to 50 °C, even more preferably between 30 °C to 40 °C.

## Patentansprüche

1. Mineralisches Bindemittel, geeignet zur Verwendung beim Binden von Zuschlag in einem mineralischen Mörtel- oder Betongemisch, wobei das Bindemittel die folgenden Komponenten umfasst:
a) wenigstens 40 Gew.-% eines kalzinierten kaolinitischen Tons und ultrafein zerkleinerten Bau- und Abbruchabfalls (B&A Abfall), wobei der ultrafeine B&A Abfall einen maximalen Durchmesser von 250 µm hat,
b) 2-50 Gew.-% eines chemischen Aktivators; und
wobei der kalzinierte kaolinitische Ton, der ultrafein zerkleinerte B&A Abfall und der chemische Aktivator in einer kombinierten Menge von wenigstens 90 Gew.-%, basierend auf dem Gesamtgewicht des mineralischen Bindemittels, vorhanden sind.

2. Mineralisches Bindemittel nach dem vorhergehenden Anspruch, wobei der kalzinierte kaolinitische Ton, der ultrafein zerkleinerte B&A Abfall und der chemische Aktivator in einer kombinierten Menge von wenigstens 95 Gew.-%, vorzugsweise wenigstens 99 Gew.-%, basierend auf dem Gesamtgewicht des mineralischen Bindemittels, vorhanden sind.

3. Mineralisches Bindemittel nach einem der vorhergehenden Ansprüche, wobei der ultrafein zerkleinerte B&A Abfall ausgewählt ist aus der Gruppe bestehend aus ultrafein zerkleinerten Keramiken, ultrafein zerkleinertem Beton und Kombinationen davon, vorzugsweise ausgewählt aus der Gruppe bestehend aus ultrafein zerkleinertem Ziegel, ultrafein zerkleinertem Mauerwerk und Kombinationen davon, wobei der ultrafein zerkleinerte B&A Abfall am bevorzugtesten ultrafein zerkleinerte Ziegel sind.

4. Mineralisches Bindemittel nach einem der vorhergehenden Ansprüche, wobei der ultrafein zerkleinerte B&A Abfall ultrafein zerkleinerter Ziegel ist und wobei der kalzinierte kaolinitische Ton und der ultrafein zerkleinerten Ziegel zwischen 70-80 Gew.-% SiO₂, zwischen 10 und 20 Gew.-% Al₂O₃ und zwischen 2 und 6 Gew.-% Fe₂CO₃ enthält, basierend auf dem Gesamtgewicht des ultrafein zerkleinerten B&A Abfall und des kalzinierten kaolinitischen Tons.

5. Mineralisches Bindemittel nach einem der vorhergehenden Ansprüche, wobei der kalzinierte kaolinitische Ton Metakaolin ist.

6. Mineralisches Bindemittel nach einem der vorhergehenden Ansprüche, wobei das Gewichtsverhältnis zwischen kalziniertem kaolinitischen Ton und ultrafeinem B&A Abfall 1:1 bis 1:9 ist, vorzugsweise zwischen 1:1 und 2:8, bevorzugter zwischen 1:1 und 3:7.

7. Mineralisches Bindemittel nach einem der vorhergehenden Ansprüche, wobei der B&A Abfall einen maximalen Durchmesser von 200 µm, vorzugsweise 150 µm, hat.

8. Mineralisches Bindemittel nach einem der vorhergehenden Ansprüche, enthaltend weniger als 1 Gew.-%, vorzugsweise weniger als 0,5 Gew.-%, bevorzugter weniger als 0,1 Gew.-% Flugasche, Schlacke, Metallrückstände, Reishülsenasche, Vulkanasche und Silikastaub.

9. Mineralisches Mörtelvorläufergemisch, geeignet zur Verwendung in einem mineralischen Mörtelgemisch, basierend auf dem mineralischen Bindemittel nach einem der vorhergehenden Ansprüche in einer Menge von 15-50 Gew.-%, wobei das mineralische Mörtelvorläufergemisch ferner umfasst:
c) 50-85 Gew.-% eines Feinzuschlag, umfassend Partikel mit einem Durchmesser von bis zu 4 mm, vorzugsweise zwischen 155 µm und 4 mm; und
wobei die kombinierte Menge der Komponenten a)-c) wenigstens 90 Gew.-%, vorzugsweise wenigstens 95 Gew.-%, bevorzugter wenigstens 99 Gew.-%, basierend auf dem Gesamtgewicht des mineralischen Mörtelvorläufergemischs, ist.

10. Mineralisches Mörtelgemisch basierend auf dem mineralischen Mörtelvorläufergemisch nach Anspruch 9 in einer Menge von 65-96 Gew.-% , wobei das mineralische Mörtelgemisch den chemischen Aktivator umfasst und wobei das mineralische Mörtelgemisch ferner umfasst:
d) Wasser in einer Menge von 25 Gew.-% oder weniger, vorzugsweise 4-25 Gew.-% Wasser; wobei die kombinierte Menge der Komponenten a)-d) wenigstens 90 Gew.-%, vorzugsweise wenigstens 95 Gew.-%, bevorzugter wenigstens 99 Gew.-%, basierend auf dem Gesamtgewicht des mineralischen Mörtelgemischs, ist.

11. Betonvorläufergemisch, geeignet für die Verwendung in einem Betongemisch, basierend auf dem mineralischen Bindemittel nach einem der Ansprüche 1-8 in einer Menge von 15-45 Gew.-%; wobei das Betonvorläufergemisch ferner umfasst:
c) 50-85 Gew.-% eines groben und optional feinen Zuschlagstoffs, wobei der grobe Zuschlag Partikel mit einem Durchmesser zwischen 4 mm und 50 mm umfasst; und
wobei die kombinierte Menge der Komponenten a)-c) wenigstens 90 Gew.-%, vorzugsweise wenigstens 95 Gew.-%, bevorzugter wenigstens 99 Gew.-%, basierend auf dem Gesamtgewicht des Betonvorläufergemischs, ist.

12. Betongemisch, basierend auf dem Betonvorläufergemisch nach Anspruch 11 in einer Menge von 65-96 Gew.-%, wobei das Betongemisch den chemischen Aktivator umfasst und wobei das Betongemisch ferner umfasst:
d) 4-25 Gew.-% Wasser; wobei die kombinierte Menge der Komponenten a)-d) wenigstens 90 Gew.-%, vorzugsweise wenigstens 95 Gew.-%, bevorzugter wenigstens 99 Gew.-%, basierend auf dem Gesamtgewicht des Betongemischs, ist.

13. Verfahren zur Herstellung eines gehärteten mineralischen Mörtelgemischs oder gehärteten Betons, das Verfahren umfassend, Bereitstellen des Mörtelgemischs nach Anspruch 10 oder des Betongemischs nach Anspruch 12 und das Gemisch aushärten zu lassen.

14. Verfahren nach Anspruch 13, wobei das Aushärten erreicht wird, indem das mineralische Mörtelgemisch wenigstens 12 h, vorzugsweise wenigstens 18 h, bevorzugter wenigstens 24 h, stehen gelassen wird, und wobei das Aushärten vorzugsweise bei einer Temperatur zwischen 20 °C und 60 °C, bevorzugter zwischen 25 °C und 50 °C, noch bevorzugter zwischen 30 °C und 40 °C erfolgt.

## Revendications

1. Liant minéral approprié à l'utilisation dans la liaison d'un agrégat dans un mortier minéral ou un mélange de béton, ledit liant comprenant les composants suivants :
a) au moins 40 % en poids d'une argile kaolinitique calcinée et de déchets de construction et de démolition (DC&D) concassés ultrafins, où les DC&D ultrafins ont un diamètre maximum de 250 µm,
b) 2 à 50 % en poids d'un activateur chimique ; et
dans lequel l'argile kaolinitique calcinée, les DC&D concassés ultrafins et l'activateur chimique sont présents en une quantité combinée d'au moins 90 % en poids, sur la base du poids total du liant minéral.

2. Liant minéral selon la revendication précédente, dans lequel l'argile kaolinitique calcinée, les DC&D concassés ultrafins et l'activateur chimique sont présents en une quantité combinée d'au moins 95 % en poids, de préférence d'au moins 99 % en poids, sur la base du poids total du liant minéral.

3. Liant minéral selon l'une quelconque des revendications précédentes, dans lequel les DC&D concassés ultrafins sont choisis dans le groupe consistant en céramiques concassées ultrafines, béton concassé ultrafin et combinaisons de ceux-ci, de préférence choisis dans le groupe consistant en brique concassée ultrafine, maçonnerie concassée ultrafine et des combinaisons de celles-ci, de manière mieux préférée dans lequel les C&D concassés ultrafins sont de la brique concassée ultrafine.

4. Liant minéral selon l'une quelconque des revendications précédentes, dans lequel les DC&D concassés ultrafins sont de la brique concassée ultrafine et dans lequel l'argile kaolinitique calcinée et la brique concassée ultrafine contiennent entre 70 et 80 % en poids de SiO₂, entre 10 et 20 % en poids d'Al₂O₃ et entre 2 et 6 % en poids de Fe₂O₃, sur la base du poids total des DC&D concassés ultrafins et de l'argile kaolinitique calcinée.

5. Liant minéral selon l'une quelconque des revendications précédentes, dans lequel l'argile kaolinitique calcinée est le métakaolin.

6. Liant minéral selon l'une quelconque des revendications précédentes, dans lequel le rapport en poids entre l'argile kaolinitique calcinée et les DC&D ultrafins est de 1 : 1 à 1 : 9, de préférence entre 1 : 1 et 2 : 8, de manière mieux préférée entre 1 : 1 et 3 : 7.

7. Liant minéral selon l'une quelconque des revendications précédentes, dans lequel les DC&D ont un diamètre maximal de 200 µm, de préférence de 150 µm.

8. Liant minéral selon l'une quelconque des revendications précédentes contenant moins de 1 % en poids, de préférence moins de 0,5 % en poids, de manière mieux préférée moins de 0,1 % en poids de cendre volante, de laitier, de résidus métalliques, de cendre d'écorce de riz, de cendre volcanique et de fumée de silice.

9. Mélange précurseur de mortier minéral approprié pour l'utilisation dans un mélange de mortier minéral à base de liant minéral selon l'une quelconque des revendications précédentes en une quantité de 15 à 50 % en poids, ledit mélange de précurseur de mortier minéral comprenant en outre :
c) 50 à 85 % en poids d'un agrégat fin comprenant des particules ayant un diamètre allant jusqu'à 4 mm, de préférence entre 155 µm et 4 mm ; et
dans lequel la quantité combinée de composants a) à c) est d'au moins 90 % en poids, de préférence d'au moins 95 % en poids, de manière mieux préférée d'au moins 99 % en poids sur la base du poids total du mélange précurseur de mortier minéral.

10. Mélange de mortier minéral à base du mélange précurseur de mortier minéral selon la revendication 9 en une quantité de 65 à 96 % en poids, où ledit mélange de mortier minéral comprend ledit activateur chimique et où ledit mélange de mortier minéral comprend en outre :
d) de l'eau en une quantité de 25 % en poids ou moins, de préférence 4 à 25 % en poids d'eau ;
dans lequel la quantité combinée des composants a) à d) est d'au moins 90 % en poids, de préférence d'au moins 95 % en poids, de manière mieux préférée d'au moins 99 % en poids, sur la base du poids total du mélange de mortier minéral.

11. Mélange précurseur de béton, approprié pour l'utilisation dans un mélange de béton, à base du liant minéral selon l'une quelconque des revendications 1 à 8 en une quantité de 15 à 45 % en poids, ledit mélange de béton précurseur comprenant en outre :
c) 50 à 85 % en poids d'un agrégat grossier et éventuellement fin, où l'agrégat grossier comprend des particules ayant un diamètre compris entre 4 mm et 50 mm ; et
dans lequel la quantité combinée des composants a) à c) est d'au moins 90 % en poids, de préférence d'au moins 95 % en poids, de manière mieux préférée d'au moins 99 % en poids sur la base du poids total du mélange précurseur de béton.

12. Mélange de béton à base du mélange précurseur de mortier minéral selon la revendication 11 en une quantité de 65 à 96 % en poids, où ledit mélange de béton comprend ledit activateur chimique et où ledit mélange de béton comprend en outre :
d) 4 à 25 % en poids d'eau ; où la quantité combinée des composants a) à d) est d'au moins 90 % en poids, de préférence d'au moins 95 % en poids, de manière mieux préférée d'au moins 99 % en poids sur la base du poids total du mélange de béton.

13. Procédé de préparation d'un mélange de mortier minéral durci ou béton durci, ledit procédé comprenant la fourniture du mélange de mortier selon la revendication 10 ou du mélange de béton selon la revendication 12, et le repos dudit mélange pour durcissement.

14. Procédé selon la revendication 13, dans lequel le durcissement est réalisé en permettant au mélange de mortier minéral de reposer pendant au moins 12 h, de préférence au moins 18 h, de manière mieux préférée au moins 24 h, et de préférence dans lequel le durcissement est réalisé à une température comprise entre 20°C et 60°C, de manière mieux préférée de 25°C à 50°C, de manière encore mieux préférée comprise entre 30°C et 40°C.
